# EUROPÄISCHE PATENTSCHRIFT

(11) **EP 2 794 084 B1**
(45) Veröffentlichungstag und Bekanntmachung des Hinweises auf die Patenterteilung: **20.02.2019**
(21) Anmeldenummer: 12809592.4
(22) Anmeldetag: 06.12.2012
(51) Int. Cl.: B01J 8/02, B01J 19/24, C10L 3/08, C07C 1/12

(54) **METHANISIERUNGSREAKTOR MIT EINER SPÜLVORRICHTUNG**
METHANATION REACTOR HAVING A FLUSHING DEVICE
RÉACTEUR DE MÉTHANISATION AVEC UN DISPOSITIF DE RINÇAGE

(30) Priorität: 22.12.2011 DE 102011121930
(43) Veröffentlichungstag der Anmeldung: 29.10.2014
(73) Patentinhaber: Hitachi Zosen Inova Etogas GmbH, 70565 Stuttgart (DE)
(72) Erfinder: BUXBAUM, Martin, A-6861 Alberschwende (AT)
(74) Vertreter: Leinweber & Zimmermann
(86) Internationale Anmeldenummer: PCT/EP2012/005053
(87) Internationale Veröffentlichungsnummer: WO 2013/091788

(56) Entgegenhaltungen:
- WO-A1-2004/067164
- WO-A2-2011/076315
- US-A1- 2011 087 054

## Beschreibung

Die Erfindung betrifft einen Reaktor zum katalytischen Methanisieren eines Kohlendioxid und Wasserstoff enthaltenden Gasgemisches mit einem Reaktorbehälter, einem darin in einem von einem Reaktoreingang für das Gasgemisch zu einem Reaktorausgang für das methanisierte Gasgemisch verlaufenden Hauptströmungsweg angeordneten Katalysator (Katalysatorbett) und wenigstens einem in dem Reaktorbehälter abseits des Hauptströmungswegs gelegenen Raumbereich, der aber zum Hauptströmungsweg hin für das Gasgemisch an einer Anströmseite offen ist. Der Reaktor weist eine Spülanordnung zum Spülen des Reaktors mit einem Spülgas auf. Ferner betrifft die Erfindung ein Verfahren zum Betreiben eines solchen Reaktors.

Ein bekannter Reaktor dieser Art ist bspw. ein Festbettreaktor mit einem bevorzugt nickelhaltigen Katalysator zum Katalysieren der Methanisierungsreaktion. Bei Betrieb des Reaktors wird das Gasgemisch über den Reaktoreingang in den Reaktorbehälter eingeleitet, entlang des Hauptströmungsweges durch den Reaktorbehälter zu dem Reaktorausgang geführt und dabei über den im Hauptströmungsweg angeordneten Katalysator methanisiert.

Im Inneren des Reaktorbehälters sind auch abseits des Hauptströmungswegs gelegene Raumbereiche vorhanden, wobei jedoch eine Fluidverbindung zwischen dem Hauptströmungsweg und den abseits gelegenen Raumbereichen besteht, so dass das Gasgemisch bei Betrieb des Reaktors auch in die abseits gelegenen Raumbereiche strömen kann und diese zumindest teilweise ausfüllt. Mit anderen Worten sind die abseits gelegenen Raumbereiche zu dem Hauptströmungsweg hin offen und sind vom Hauptströmungsweg aus an einer Anströmseite für das Gasgemisch zugänglich.

Es können zwei oder mehr solche Reaktoren hintereinander geschaltet sein, die dann von dem Gasgemisch nacheinander durchströmt werden. Das in den Reaktorbehälter eingeleitete Gasgemisch kann neben Wasserstoff und Kohlendioxid, die in einem im wesentlichen für die Methanherstellung passenden stöchiometrischen Verhältnis eingeleitet werden, auch Anteile an Wasserdampf, Kohlenmonoxid, Methan, anderen Kohlenwasserstoffen sowie Verunreinigungen in Form diverser Minorkomponenten und Inertgasen (z. B. N₂) aufweisen. Das Gasgemisch wird unter einer vorgegebenen Temperatur und einem vorgegebenen Druck durch den Reaktorbehälter geleitet, in welchem dann die folgenden in Summe CH₄ bildenden Prozesse ablaufen:
1) CO + H₂O ↔ CO₂ + H₂, die sogenannte water-gas shift reaction
2) CO + 3H₂ ↔ CH₄ + H₂O, die CO-Methanisierung und
3) CO₂ + 4H₂ ↔ CH₄ + 2H₂O, die CO₂-Methanisierung

So wird ein bestimmter Methananteil in dem am Reaktorausgang austretenden methanisierten Gasgemisch erhalten. Für eine weitere Erhöhung des Methangehalts kann das Gasgemisch in einen zweiten Reaktor eingeleitet werden, wobei aus dem aus dem zweiten Reaktor austretenden Gasgemisch mit bekannten Mitteln Wasser entfernt und ggf. überschüssige Reaktanden entfernt werden, um ein Produktgas mit über 90 % Methananteil zu erhalten. Das mit Hilfe solcher Reaktoren erzeugte methanreiche Produktgas kann bei entsprechend hohem Methangehalt als "synthetisches" Erdgas verschiedenen Bestimmungen zugeführt werden. Details zu dem entsprechenden Methanisierungsverfahren sind in der Druckschrift WO 2011/076315 offenbart, deren Inhalt durch Verweis in diese Schrift aufgenommen wird.

Neben den oben erwähnten Reaktionen können im Reaktorbehälter weitere, teilweise unerwünschte Reaktionen stattfinden, die zur Erzeugung von Nebenprodukten und Verunreinigungen führen können, die sich dann im Reaktorbehälterinneren ablagern. So besteht beispielsweise bei Erzeugung eines Produkts (CH₄ + Eduktgasrest) aus einem Eduktgas die fortwährende Gefahr, dass die kohlenstoffhaltigen Verbindungen dazu neigen, elementaren Kohlenstoff auf dem Katalysator abzuspalten, was zu dessen Deaktivierung führt, wobei die Abscheidung von Kohlenstoff auf dem Katalysator, auf der Begrenzung des Hauptströmungswegs und/oder auf einer anderen Reaktorbehälterinnenwand problematisch sein kann. Im Prozess werden diese unerwünschten Kohlenstoffablagerungen durch Prozesskontrolle (Temperatur, H₂O-Zugabe, Eduktgaszusammensetzung) weitestgehend minimiert.

Ferner können mit der Zeit undefinierte Gasgemische im Reaktorbehälter entstehen. Es ist erwünscht, in regelmäßigen Abständen bzw. nach vorgegebenen Betriebszeiten des Reaktors die im Reaktorbehälter enthaltene Gasgemischmenge auszutauschen und durch ein bekanntes Gasgemisch ohne Nebenprodukte und/oder Verunreinigungen zu ersetzen, um den Reaktor wieder in einen exakt definierten Zustand zu bringen.

Aus den Druckschriften DE 2 200 004 A und DE 1 645 840 A ist jeweils ein Verfahren zur Methanisierung von sogenanntem Reichgas bekannt, das durch Spalten von verdampfbaren flüssigen Kohlenwasserstoffen an nickelreichen Katalysatoren bei Temperaturen um 450°C erzeugt wird. Das Reichgas enthält neben Kohlendioxid, Methan und Wasserstoff auch Kohlenmonoxid. Das Kohlenmonoxid kann zu Kohlenstoff reagieren, der sich auf der Katalysatoroberfläche festsetzt und zu einer Deaktivierung des Katalysators führt.

Darüber hinaus erfordern die in den Druckschriften DE 2 200 004 A und DE 1 645 840 A beschriebenen Verfahren zur Methanisierung ein nachträgliches Entfernen von nicht umgesetztem Kohlendioxid durch Auswaschen in einer wäßrigen Lösung.

Aus dem Stand der Technik bekannte Reaktoren weisen aus den genannten Gründen regelmäßig eine Spülanordnung zum Spülen des Reaktorbehälters mit einem Spülfluid auf. Das Spülfluid, meist ein Spülgas, wird dabei in regelmäßigen Abständen unter einem vorgegebenen Druck durch den Reaktor geleitet, und Verunreinigungen, Nebenprodukte und/oder sonstige Gasgemischbestandteile, die sich im Reaktor angesammelt haben, werden von dem Spülgas aus dem Reaktorbehälter verdrängt bzw. von dem Spülgas aus dem Reaktor abtransportiert. Der Reaktor wird dabei solange mit dem Spülgas durchspült, bis möglichst die gesamte im Reaktorbehälter enthaltene Gasgemischmenge durch das Spülgas ersetzt ist, so dass sich der Reaktor wieder in einem exakt definierten Zustand befindet. Anschließend kann der Reaktor wieder in Betrieb genommen werden. Im Idealfall, in dem das Spülgas in einer Pfropfenströmung durch den Reaktor strömt, ist exakt das Reaktorvolumen an Spülgas erforderlich, um die Gasfüllung aus dem vorangegangenen Reaktorbetrieb aus dem Reaktorbehälter zu verdrängen.

Es hat sich allerdings herausgestellt, dass die bekannten Spülanordnungen nicht zufriedenstellend arbeiten, da trotz regelmäßiger und langdauernder Spülung noch immer Reste der Gasfüllung aus dem vorangegangenen Reaktorbetrieb und ggf. auch Verunreinigungen und Nebenprodukte im Reaktor verbleiben. Auch bei Leitung einer Spülgasmenge durch den Reaktor, die das Reaktorvolumen deutlich übersteigt, wird mit bekannten Spülanordnungen nicht die gesamte Gasfüllung aus dem vorangegangenen Betrieb aus dem Reaktor verdrängt.

Der vorliegenden Erfindung liegt entsprechend die Aufgabe zugrunde, einen Reaktor mit einer verbesserten Spülanordnung bereitzustellen, mit der die Gasfüllung und darin enthaltene unerwünschte Gasgemischbestandteile und ggf. Verunreinigungen effektiver aus dem Reaktorbehälter abtransportiert werden kann.

Diese Aufgabe wird erfindungsgemäß dadurch gelöst, dass die Spülanordnung einen Zugang zum Leiten des Spülgases in den abseits gelegenen Raumbereich hinein und/oder aus dem abseits gelegenen Raumbereich heraus an einer nicht mit der Anströmseite zusammenfallenden Seite aufweist.
Die Erfindung geht auf die Erkenntnis zurück, dass es gerade die abseits des Hauptströmungswegs im Inneren des Reaktorbehälters vorhandenen Raumbereiche sind, in denen die mittlere Strömungsgeschwindigkeit des Gasgemisches bei Betrieb des Reaktors besonders gering ist, so dass sich Nebenprodukte oder Verunreinigungen in diesen Bereichen gut ansammeln und dort ablagern können. Hinzu kommt, dass das Spülgas bei bekannten Spülanordnungen ebenfalls entlang des Hauptströmungswegs durch den Reaktorbehälter geleitet wird, um den dort angeordneten Katalysator von Verunreinigungen und Ablagerungen zu befreien. Auf diese Weise kann zwar der Hauptströmungsweg relativ zuverlässig gereinigt und von Ablagerungen befreit werden, jedoch ist trotz Spülung der Austausch des gesamten im Reaktorinnenraum vorhandenen Gasgemischs nicht möglich, da das Spülgas kaum in die abseits des Hauptströmungswegs gelegenen Raumbereiche eindringt. Regelmäßig sind zwischen Hauptströmungsweg und abseits gelegenen Raumbereichen nämlich nur kleine Öffnungen oder Spalte vorhanden. Bei Leiten des Spülgases entlang des Hauptströmungswegs ist die Strömungsgeschwindigkeit des Spülgases in den abseits gelegenen Raumbereichen entsprechend sehr gering, so dass sich dort kaum ein Gasfluß ausbildet und somit auch kaum ein Gasaustausch stattfindet.

Durch den erfindungsgemäß vorgesehenen Zugang zum Leiten des Spülgases in den abseits gelegenen Raumbereich hinein bzw. aus ihm heraus kann bei Spülung ein Gasaustausch gerade in den als problematisch erkannten abseits gelegenen Raumbereichen erfolgen. Der abseits gelegene Raumbereich ist nämlich einerseits zu dem Hauptströmungsweg hin an der Anströmseite offen, andererseits weist er den Zugang zum Einleiten und/oder Ausleiten von Spülgas auf, so dass bei Spülung mit dem Spülgas ein Spülgasstrom durch den abseits gelegenen Raumbereich hindurch entsteht. Hierdurch kann die im abseits gelegenen Raumbereich vorhandene Gasgemischmenge wirksam durch das Spülgas verdrängt und ausgetauscht, und gleichzeitig die Menge an erforderlichem Spülgas verringert werden. Ferner führt die Leitung von Spülgas durch den Zugang zu einer kürzeren Spülzeit, was im Ergebnis eine höhere Produktion an methanisiertem Gasgemisch zur Folge hat. Die abseits gelegenen Raumbereiche (Toträume des Reaktors) können erfindungsgemäß in vollständiger Weise gespült werden.

Die eingangs erläuterten Probleme kommen besonders dann zur Geltung, wenn der Reaktorbetrieb nach dem Spülen nicht, wie es bei herkömmlichen Methanisierungsverfahren der Fall ist, sofort wiederaufgenommen wird, wie es bei standardisierten Methanisierungsreaktionen der Fall ist. Erfolgt nämlich ein Verweilen des Reaktors in einem Stand-by-Betrieb, kann sich das in den abseits gelegenen Bereichen stehende Gasgemisch im gesamten Reaktor ausbreiten. Die Wirkungen der oben erläuterten Prozesskontrolle treten im Stillstand nicht ein, so dass dann die schädlichen Kohlenstoffablagerungen am Katalysator auftreten.

Wird beispielsweise mit H₂ gespült, wird aufgrund der verbesserten Spülung der Toträume auch der für den Spülvorgang erforderliche H₂-Verbrauch gesenkt.

Vorzugsweise weist die Spülanordnung einen Spülweg mit einem ausgehend von dem Zugang durch den abseits gelegenen Raumbereich zu dem Hauptströmungsweg verlaufenden Abschnitt auf, entlang dem das Spülgas durch den Reaktorbehälter leitbar ist. Unter Spülweg wird im folgenden derjenige Weg verstanden, entlang dem das Spülgas durch den Reaktor leitbar ist, wobei der Spülweg ausgehend von einem oder mehreren Zugängen zum Einleiten des Spülgases hin zu einem oder mehreren Abgängen zum Ausleiten des Spülgases aus dem Reaktorbehälter führen kann, er also mehrere Spüläste aufweisen kann, die jeweils einen Spülgaszugang und einen Spülgasabgang aufweisen. Wenn der Spülweg durch den abseits gelegenen Raumbereich hindurchführt, wird dieser bei Spülung besonders gut gereinigt.

Das Spülgas kann entweder über den Zugang in den abseits gelegenen Raumbereich eingeführt oder alternativ über den Zugang aus dem abseits gelegenen Raumbereich abgeleitet werden. Im ersten Fall durchquert das Spülgas den abseits gelegenen Raumbereich in Richtung auf die Anströmseite und gelangt dann in den Hauptströmungsweg. Im zweiten Fall strömt das Spülgas über den Hauptströmungsweg an der Anströmseite in den abseits gelegenen Raumbereich und durch diesen hindurch in Richtung auf den Zugang. In jedem Fall wird die in dem abseits gelegenen Raumbereich vorhandene Gasmenge durch die entlang des Abschnitts strömende Spülgasmenge wirksam verdrängt bzw. abtransportiert.

Ein besonders wirksamer und schneller Austausch der gesamten im Reaktorbehälter vorhandenen Gasgemischmenge ist dann möglich, wenn der Spülweg einen im wesentlichen entlang des Hauptströmungswegs verlaufenden Hauptspülast und einen den Abschnitt aufweisenden Nebenspülast aufweist. Der Hauptspülast kann von dem Reaktoreingang entlang des Hauptströmungswegs zu dem Reaktorausgang verlaufen. In diesem Fall wird das Spülgas über den Reaktoreingang in den Reaktorbehälter eingeleitet und über den Reaktorausgang ausgeleitet oder umgekehrt. Alternativ können gesonderte Spülgaseingänge und/oder Spülgasabgänge entlang des Hauptströmungswegs vorgesehen sein. Der Nebenspülast kann von dem Zugang durch den abseits gelegenen Raumbereich zu dem Reaktorausgang verlaufen. In diesem Fall fällt der Nebenspülast abschnittsweise mit dem Hauptspülast zusammen und verläuft abschnittsweise entlang des durch den abseits gelegenen Raumbereich führenden Abschnitts.

In einer bevorzugten Ausführungsform weist der Reaktorbehälter wenigstens eine in das Reaktorinnere vorstehende Abtrennungswand zur Leitung des durch den Zugang strömenden Spülgases entlang des Nebenspülastes auf.

Dadurch entsteht auch eine Verringerung des Widerstands im Hauptströmungsweg. Die Abtrennung ist vorzugsweise derart angeordnet, dass das durch den Zugang strömende Spülgas durch einen möglichst großen Teilraum des abseits gelegenen Raumbereichs strömen muß, um zu dem Hauptströmungsweg zu gelangen. Auf diese Weise wird der abseits gelegene Raumbereich praktisch vollständig von dem Spülgas durchströmt. Zusätzlich oder alternativ kann die Abtrennungswand derart angeordnet sein, dass zwischen dem abseits gelegenem Raumbereich und dem Hauptströmungsweg vorhandene Durchlässe bzw. Öffnungen zumindest teilweise von der Abtrennungswand abgedeckt werden, so dass das Spülgas jedenfalls großenteils nur durch einen von dem Zugang weit entfernten Durchlass zu dem Hauptströmungsweg strömt. Zusätzlich kann so die Strömungsgeschwindigkeit des Spülgases im abseits gelegenen Raumbereich erhöht werden.

Falls der Reaktorbehälter mehrere abseits gelegene Raumbereiche aufweist, kann jedem abseits gelegenen Raumbereich ein eigener Nebenspülast mit Zugang und ggf. einer eigenen Abtrennungswand zugeordnet sein. Auf diese Weise ist eine wirksamere und schnellere Spülung des gesamten Reaktorbehälters möglich.

In einer besonders bevorzugten Ausführungsform der Erfindung weist der Reaktor Mittel zum Einleiten des Spülgases über den Reaktoreingang und über den Zugang in den Reaktorbehälter und Mittel zum Ausleiten des Spülgases über den Reaktorausgang aus dem Reaktorbehälter auf. Das Spülgas ist dann an verschiedenen Stellen in den Reaktorbehälter einleitbar, durchströmt diesen jedoch einheitlich in Richtung auf den Reaktorausgang. Falls mehrere Zugänge für das Spülgas vorhanden sind, sind diese vorzugsweise derart an den abseits gelegenen Raumbereich angeordnet und so dimensioniert, dass möglichst wenig Spülgas, bevorzugt exakt das Reaktorbehältervolumen an Spülgasmenge, insgesamt durch die Zugänge und den Reaktoreingang einzuleiten ist, um die im Reaktorbehälter vorhandene Gasfüllung vollständig aus dem Reaktorbehälter zu verdrängen. Die auszutauschende Gasfüllung entweicht dann durch den Reaktorausgang. Auf diese Weise werden die für die Spülung erforderliche Spülgasmenge sowie die Spülzeit verkürzt.

Zusätzlich oder alternativ kann die Spülanordnung eine Spülschleife mit einem Abgang zum Ableiten von Spülgas aus dem Hauptströmungsweg aufweisen, wobei das abgeleitete Spülgas über den Zugang in den abseits gelegenen Raumbereich einleitbar ist. Wenn bspw. das Spülgas unter Druck durch den Reaktoreingang eingeleitet wird, fließt dieses über einen in der Nähe des Reaktoreingangs angeordneten Abgang über die Spülschleife direkt in den abseits gelegenen Raumbereich und weiter zurück in den Hauptströmungsweg und muß nicht über eine zusätzliche externe Zuführleitung in den abseits gelegenen Raumbereich eingeleitet werden. Es genügt also im Idealfall, das Spülgas an nur einer Stelle, bevorzugt über den Reaktoreingang, von außerhalb in den Reaktor einzuleiten, weil dieses anschließend über eine oder mehrere "interne" Spülschleifen, über einen oder mehrere Zugänge in einen oder mehrere abseits gelegene Raumbereiche strömen kann. Auf diese Weise können Kosten für Gaszuführleitungen eingespart werden und ein einheitlicher Gasdruck im gesamten Reaktor sichergestellt werden. Zum Strömungsantrieb in der Spülschleife trägt der im Reaktor herrschende Druckunterschied, durch interne Druckverluste verursacht, bei. Die internen Leitungen können auch vollständig innerhalb des Reaktorbehälters verlaufen.

Vorzugsweise weist die Spülanordnung ein oder mehrere Ventile zum Steuern einer über den Zugang, den Reaktoreingang und/oder den Reaktorausgang zu leitenden Spülgasmenge auf. Bei Betrieb des Reaktors sind die Ventile üblicherweise geschlossen, so dass kein Spülgas in den Reaktorbehälter einströmt. Ferner kann der Spülgasdruck über die Ventile eingestellt werden. Auf diese Weise kann der Reaktorbehälter bei der Spülung unter dem gleichen Druck gehalten werden wie bei Betrieb des Reaktors. Ferner können durch entsprechende Ansteuerung der Ventile die über den Hauptspülast und die über die Nebenspüläste zu leitenden Spülgasmengen unabhängig voneinander eingestellt werden. Beispielsweise kann durch Steuerung des entsprechenden Ventils ein besonders problematischer abseits gelegener Raumbereich länger mit Spülgas durchströmt werden als andere Bereiche. Im Betriebszustand werden interne Leitungen/Spülschleifen geschlossen.

Der Zugang kann in Form einer Öffnung in einer Außenwand des Reaktorbehälters gebildet sein. Eine Öffnung in einer Außenwand des Reaktorbehälters ist nämlich besonders einfach und kostengünstig herstellbar. Ferner ist der Zugang dann leicht von außerhalb des Reaktorbehälters erreichbar und eine Zuführleitung zur Zuführung des Spülgases zu der Öffnung kann problemlos von außerhalb an der Öffnung angebracht werden. Alternativ kann eine Zuführleitung zur Zuführung des Spülgases zu dem Zugang auch im Inneren des Reaktorbehälters verlaufen, bspw. entlang einer Innenseite einer Reaktorbehälteraußenwand.

Das Spülgas ist vorzugsweise ein Inertgas und/oder ein Bestandteil des Gasgemischs. Als Inertgas kann beispielsweise N₂ verwendet werden. Falls ein Bestandteil des Gasgemischs (H₂) als Spülgas verwendet wird, ist die Zuführung eines weiteren Gases als Spülgas nicht erforderlich, wodurch der Reaktoraufbau vereinfacht wird und Kosten für Zuführung und Anschluß eines weiteren Gases entfallen. Andererseits hat ein Inertgas wie etwa N₂ den Vorteil, dass es besonders günstig erhältlich ist. Es kann auch mit dem rückgeführten, bereits methanisierten Gasgemisch gespült werden.

In einer quer zu dem Hauptströmungsweg verlaufenden Schnittebene weicht die Form der äußeren Begrenzung eines in den Reaktorbehälter eingebrachten Einsatzes, der den Hauptströmungsweg aufweist, vorzugsweise von der Form der inneren Begrenzung der Reaktorbehälterwand ab. Der Reaktorbehälter eines erfindungsgemäßen Reaktors ist zur Aufnahme des Reaktorinnendruckes vorzugsweise im wesentlichen zylindrisch, so dass in einer quer zu dem Hauptströmungsweg verlaufenden Schnittebene die Form der inneren Begrenzung der Reaktorbehälteraußenwand im Wesentlichen kreisförmig ist. In den zylindrischen Reaktorbehälter kann der den Hauptströmungsweg aufweisende Einsatz mit bspw. eckiger äußerer Begrenzung derart eingebracht sein, dass der abseits gelegene Raumbereich außerhalb des Einsatzes im Inneren des Reaktorbehälters gebildet ist. Ein zylindrisch geformter Reaktorbehälter ist besonders druckfest und einfach herstellbar. Andererseits weist der den Hauptströmungsweg aufweisende Einsatz in einer quer zur Zylinderachse des Reaktorbehälters verlaufenden Ebene regelmäßig einen eckigen Querschnitt auf, da er üblicherweise aus Platten o. dgl. gebildet ist, die einerseits zur Wärmeableitung dienen können und zwischen denen andererseits der Katalysator angeordnet ist und zwischen denen der Hauptströmungsweg verläuft. Die außerhalb des Einsatzes im Reaktorbehälter vorhandenen abseits gelegenen Raumbereiche bilden einen Pufferraum zwischen Reaktorbehälteraußenwand und Einsatz, so dass der Einsatz zu Reinigungs- und/oder Wartungszwecken problemlos aus dem Reaktorbehälter entnommen werden kann. Auch kann durch diesen geometrischen Aufbau das Katalysatorbett nach dessen Deaktivierung einfach ausgetauscht werden und der Hauptströmungsweg auf der geeigneten Temperatur gehalten werden.

Als Methanisierungsreaktor besonders gut geeignet ist ein Plattenreaktor. Der bei einem Plattenreaktor den Hauptströmungsweg aufweisende Einsatz besteht aus inwändig z.B. mit Druckwasser gekühlten Platten, welche die Reaktionswärme effizient abführen. Er ist vorteilhaft wegen des hohen Wärmeübergangs (Sieden in den Platten), der einfachen Kat-Befüllung und der gleichmäßigen Durchströmung. Ferner ist der Plattenreaktor in den für die Methanisierungsreaktion erforderlichen Druck- und Temperaturbereichen besonders effizient einsetzbar. Der erfindungsgemäße Reaktor kann jedoch alternativ ein anderer Reaktortyp sein.

Die Erfindung betrifft weiterhin ein Verfahren gemäß Anspruch 12 zum Betreiben eines erfindungsgemäßen Reaktors gemäß Anspruch 1, bei dem der Reaktor von einem Betriebszustand, in dem ein Gasgemisch entlang eines Hauptströmungsweges durch den Reaktor geleitet und dabei methanisiert wird, in einen Spülzustand gebracht wird, in dem ein Spülgas durch den Reaktor geleitet wird. Erfindungsgemäß wird das Spülgas durch einen abseits des Hauptströmungsweges gelegenen Raumbereich geleitet. Es wird über einen Zugang in den abseits gelegenen Raumbereich eingeleitet, durchquert diesen in Richtung auf eine zu dem Hauptströmungsweg führende Anströmseite und gelangt dann in den Hauptströmungsweg. Eine umgekehrte Flussrichtung des Spülgases ist ebenso vorstellbar.

Durch die Leitung des Spülgases durch den abseits gelegenen Raumbereich wird die in diesem Raumbereich vorhandene Gasfüllung wirksam aus dem Reaktorbehälter verdrängt, und damit wird ein Austausch der Gasfüllung des Reaktorbehälters unter Einsatz einer geringen Spülgasmenge ermöglicht.

Zusätzlich kann das Spülgas entlang des Hauptströmungsweges durch den Reaktor geleitet werden. Das Spülgas strömt dann sowohl entlang des Hauptströmungsweges als auch durch den abseits des Hauptströmungsweges gelegenen Raumbereich, so dass die gesamte Gasfüllung aus dem vorangegangenen Betrieb des Reaktors aus dem Reaktorbehälter verdrängt und durch das Spülgas ersetzt wird.

Alternativ oder zusätzlich wird das entlang des Hauptströmungswegs strömende Spülgas aus dem Hauptströmungsweg abgeführt und in den abseits gelegenen Raumbereich eingeleitet. Auf diese Weise wird praktisch eine interne Spülschleife gebildet, so dass das Spülgas nur an einer Stelle in den Reaktorbehälter eingeleitet wird, jedoch auch diejenigen abseits gelegenen Raumbereiche wirksam erreicht, die von dem Hauptströmungsweg aus von dem Spülgas kaum direkt angeströmt werden.

Die Spüldauer, d.h. die Dauer, in der sich der Reaktor im Spülzustand befindet, kann verkürzt werden und der Ertrag an methanisiertem Gasgemisch kann erhöht werden, wenn der Reaktor im Spülzustand auf etwa demselben Druck und/oder entweder derselben Temperatur gehalten wird wie im Betriebszustand.

Das Verfahren kann so betrieben werden, dass in Abhängigkeit der Verfügbarkeit des Ausgangsbestandteils H₂ der Reaktor intermittierend zwischen Normalbetrieb und Stand-by geschaltet wird. Bevorzugt erfolgt ein Spülgang nach jedem Normalbetriebsintervall. Die Umschaltung kann mehrmals pro Woche, durchschnittlich auch einmal oder mehrmals am Tag erfolgen. Die Stand-by-Zeit kann im Bereich von mehr als 30 min, aber auch im Bereich von mehreren Stunden liegen.

Somit offenbart die Erfindung auch direkt die Verwendung eines Reaktors in einem solchen intermittierenden Verfahren und dessen Einsatz in einer intermittierend betriebenen Methanisierungsanlage.

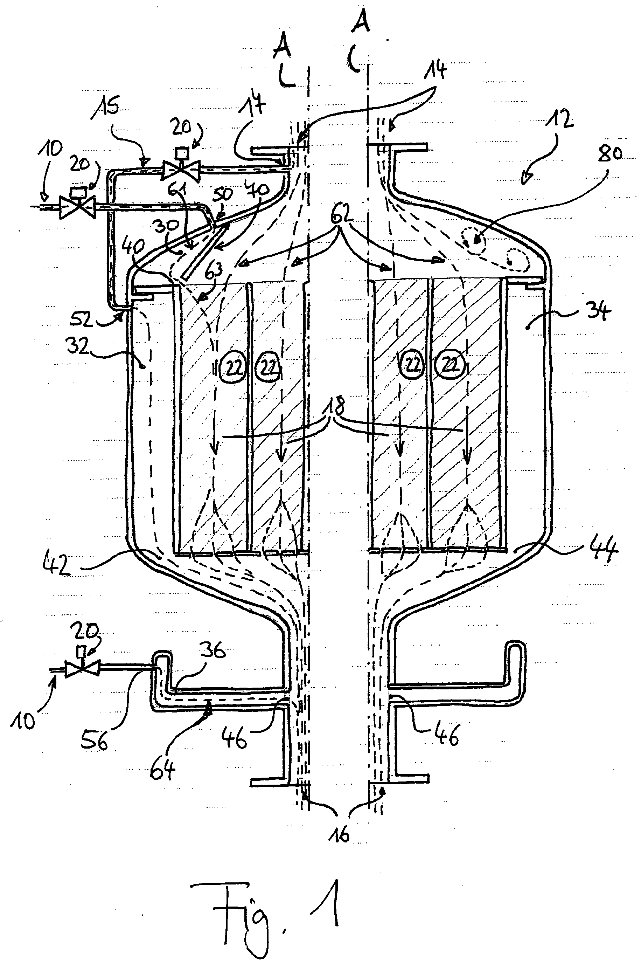

In der folgenden Beschreibung wird die Erfindung unter Bezugnahme auf die Zeichnung beispielhaft erläutert. Die einzige Zeichnung zeigt:
links eine Ausführungsform des erfindungsgemäßen Reaktors als eine Hälfte einer Schnittansicht in einer schematischen Darstellung, wobei rechts die andere Hälfte einen herkömmlichen Reaktoraufbau zeigt.

Die Figur zeigt links die Ausführungsform des erfindungsgemäßen Reaktors in einer parallel zu dem Hauptströmungsweg 18 durch den Reaktorbehälter 12 verlaufenden Schnittebene. Die beiden Linien A, A liegen tatsächlich aufeinander, rechts der rechten Linie A ist jedoch nicht die Ausführungsform, sondern ein herkömmlicher Reaktor abgebildet.

Die Zeichnung zeigt einen Plattenreaktor, wobei jedoch die Erfindung nicht auf diesen Reaktortyp beschränkt ist. Der Reaktorbehälter 12 weist insgesamt eine zylindrische Form auf, wobei ein aus Platten gebildeter und den Hauptströmungsweg 18 aufweisender Einsatz (nicht gezeigt) mit eckigem Querschnitt in den zylindrischen Reaktorbehälter 12 eingebracht ist. Das Katalysatorbett entsteht durch Schütten des Katalysatormaterials zwischen die Platten, welches von einem gitterartigen Filter am Durchfallen gehindert wird.

Aufgrund der unterschiedlichen geometrischen Formen von Einsatz und Reaktorbehälter 12 sind im Inneren des Reaktorbehälters 12 abseits des Hauptströmungswegs 18 gelegene Raumbereiche 32, 34 gebildet, die von dem Gasgemisch bei Betrieb des Reaktors zwar angeströmt werden können, in denen das Gasgemisch jedoch praktisch stillsteht und aufgrund fehlender Gasströmung nicht abfließt.

Der Reaktor dient zum katalytischen Methanisieren eines Kohlendioxid und Wasserstoff enthaltenden Gasgemisches, das über einen Reaktoreingang 14 in den Reaktorbehälter 12 eingeleitet wird, entlang des Hauptströmungswegs 18 durch den Reaktorbehälter 12 strömt und den Reaktorbehälter 12 als methanisiertes Gasgemisch über einen Reaktorausgang 16 verläßt. Der Hauptströmungsweg 18 verläuft nicht notwendigerweise auf direktem Weg von dem Reaktoreingang 14 zu dem Reaktorausgang 16, sondern entlang eines durch die Platten vorgegebenen Reaktionskanals, in dem ein nickelhaltiger Katalysator zum Katalysieren der Methanisierungsreaktion angeordnet ist. Der genaue Aufbau des die Platten und den Katalysator aufweisenden Einsatzes sowie der Verlauf des Hauptströmungsweges, entlang dem die Methaniserungsreaktion stattfindet, entsprechen dem Aufbau bei bekannten Reaktoranordnungen und sind dem Fachmann bekannt. Die Platten sind insbesondere doppelwandig ausgeführt, wobei der Platteninnenraum von Druckwasser zum Ableiten der exothermen Reaktionswärme durchströmt wird.

Neben den oben beschriebenen abseits des Hauptströmungsweges 18 gelegenen Raumbereichen 32 und 34 können verschiedene weitere abseits gelegene Raumbereiche 30, 36 im Reaktorinneren gebildet sein. Abseits gelegene Raumbereiche zeichnen sich dadurch aus, dass sie abseits des Hauptströmungswegs 18 im Reaktorbehälterinnenraum angeordnet sind, jedoch zum Hauptströmungsweg 18 hin für das Gasgemisch offen sind, da eine den Betriebsdruck aushaltende dichte Abgrenzung dieser Bereiche innerhalb des Druckbehälters nicht praktisch zu realisieren ist. Bspw. ist der in der Zeichnung gezeigte abseits gelegene Raumbereich 30 über die Anströmseite 40 zum Hauptströmungsweg 18 hin offen. Die abseits gelegenen Raumbereiche 32 und 34 sind über die Anströmseiten 42 und 44 zu dem Hauptströmungsweg 18 hin offen, und der abseits gelegene Raumbereich 36 ist über die Anströmseite 46 zu dem Hauptströmungsweg 18 hin offen. Das Gasgemisch dringt bei Betrieb des Reaktors zwar in die abseits gelegenen Raumbereiche 30, 32, 34, 36 vor, da in diesen Raumbereichen jedoch kaum eine Gasströmung vorhanden ist, verbleibt das Gasgemisch in diesen Raumbereichen und strömt nicht ab. Dies ist beispielhaft im Bereich 80 in der den Stand der Technik darstellenden Reaktorhälfte gezeigt. Entsprechend können sich Verunreinigungen und sonstige Nebenprodukte in den abseits gelegenen Raumbereichen ansammeln und dort ablagern. Insbesondere kann das verbleibende Gasgemisch bei abgestelltem Reaktor aus diesen Raumbereichen wieder in den gesamten Reaktorinnenraum ausdiffundieren.

Der erfindungsgemäße Reaktor weist ferner eine Spülanordnung 10 zum Spülen des Reaktorbehälters 12 mit einem Spülgas auf. Das Spülgas kann einerseits über den Reaktoreingang 14 in den Reaktorbehälter 12 eingeleitet werden, strömt dann entlang des Hauptströmungsweges 18 in Richtung auf den Reaktorausgang 16 und verdrängt dabei die im Hauptströmungsweg 18 vorhandene Gasfüllung aus dem vorangegangenen Reaktorbetrieb. Die in den abseits gelegenen Raumbereichen 30, 32, 34, 36 vorhandene Gasfüllung wird durch das entlang des Hauptströmungswegs 18 strömende Spülgas jedoch kaum verdrängt.

Aus diesem Grund weisen die abseits gelegenen Raumbereiche 30, 32 und 36 der gezeigten Ausführungsform jeweils einen Zugang 50, 52, 56 zum Einleiten des Spülgases auf (beim zur Darstellung des Standes der Technik gehörenden Raumbereich 34 ist dagegen kein solcher Zugang gegeben). Die Zugänge 50, 52 und 56 sind jeweils an einer Seite der abseits gelegenen Raumbereiche 30, 32 und 36 angeordnet, die nicht mit den jeweiligen Anströmseiten 40, 42, 46 zusammenfällt. Somit kann das Spülgas über die Zugänge 50, 52 und 56 in die jeweiligen abseits gelegenen Raumbereiche eingeleitet werden, diese durchströmen und die darin vorhandene Gasfüllung aus dem vorangegangenen Reaktorbetrieb verdrängen, und anschließend über die Anströmseiten 40, 42 und 46 in den Hauptströmungsweg 18 strömen. Die umgekehrte Spülrichtung ist ebenso vorstellbar.

Es sind also mehrere Spüläste 62, 63, 64 vorhanden, entlang denen das Spülgas durch den Reaktor strömt, wobei die Gesamtheit aller Spüläste 62, 63, 64 als Spülweg 60 bezeichnet wird. Der Spülweg 60 durchdringt damit praktisch den gesamten Reaktorbehälterinnenraum.

Jeder Zugang 50, 52, 56 weist ein Steuerventil 20 auf, über das die über den Zugang zu leitende Spülgasmenge steuerbar ist. Insbesondere können bei Reaktorbetrieb die Zugänge 50, 52, 56 über die Ventile 20 geschlossen werden.

Grundsätzlich sind alternativ oder gemeinschaftlich gesonderte externe wie auch interne (15) Spülleitungen denkbar. Beide Varianten sind in der Figur gezeigt. Der Reaktor weist somit eine Spülschleife 15 mit einem Abgang 17 zum Ableiten von Spülgas aus dem Hauptströmungsweg 18 auf. Das abgeleitete Spülgas wird anschließend über den Zugang 52 in den abseits gelegenen Raumbereich 32 eingeleitet. Die Zugänge können also entweder mit einer "externen" Spülgaszuführleitung (wie etwa die Zugänge 50 und 56) verbunden sein oder alternativ kann eine "interne", über ein Ventil 20 abschließbare Fluidverbindung zu dem Hauptströmungsweg 18 in Form einer Spülschleifenleitung daran angeschlossen werden. Der Antrieb für die Strömung in der Spülschleife 15 ist der Druckverlust über das Katalysatorfestbett, der zwischen der Einströmung 17 und der Abströmung 52 der Spülschleife auftritt. Eine gesonderte Bereitstellung von nochmals höherem Druck ist dann vermeidbar.

Wenn der erfindungsgemäße Reaktor von einem Betriebszustand, in dem das Gasgemisch entlang des Hauptströmungswegs 18 durch den Reaktor geleitet und dabei methanisiert wird, in einen Spülzustand gebracht wird, in dem das Spülgas durch den Reaktor geleitet wird, wird zunächst die Gasgemischzufuhr durch den Reaktoreingang 14 geschlossen, und anschließend wird durch Öffnen von einem oder mehreren Ventilen 20 Spülgas über den Reaktoreingang 14 und/oder über die Zugänge 50, 52, 56 in den Reaktorbehälter 12 eingeleitet. Es hat sich herausgestellt, dass auf diese Weise nur wenig mehr als das Reaktorbehältervolumen an Spülgas in den Reaktor eingeleitet werden muß, um die gesamte Gasfüllung aus dem vorangegangenen Reaktorbetrieb aus dem Reaktorbehälter 12 zu verdrängen. Bei Anwendung des erfindungsgemäß Verfahrens kann also einerseits die Spüldauer und auch die Menge des erforderlichen Spülgases, z.B. H₂, verringert werden, und andererseits eine wirksame Spülung des Reaktorbehälters 12 sichergestellt werden.

In das Reaktorinnere vorstehende Abtrennungswände 70 dienen zur Führung des durch den Zugang 50 strömenden Spülgases entlang eines durch den Raumbereich 30 führenden Abschnitts des Nebenspülastes 63 sowie der Führung der Hauptdurchströmung des Reaktors 12, die durch den Reaktoreingang 14 eintritt, in der Art, dass Toträume 80, wie auf der gegenüberliegenden Seite dargestellt, vermieden werden. Diese Toträume lassen sich nicht mit einer Pfropfenströmung durchströmen und erhöhen so den Spülgasbedarf. Dabei ist die Abtrennungswand 70 derart angeordnet, dass eine möglichst widerstandsarme Hauptströmung strömen kann.

Die Erfindung ist nicht auf die beschriebene Ausführungsform beschränkt. Der Reaktor ist nicht notwendigerweise ein Plattenreaktor. Die Gestalt des Reaktorbehälters 12 und der Verlauf des Hauptströmungswegs 18 können je nach Bedarf beliebig gestaltet sein. Mittel zum Einstellen einer für die Reaktion erforderlichen Temperatur und eines erforderlichen Drucks sind nicht gezeigt. Die Anordnung dieser Mittel ist dem Fachmann bekannt. Ferner können Zugänge zur Zuleitung und/oder Ableitung von Spülgas in nur einem, in mehreren oder in allen abseits gelegenen Raumbereichen vorhanden sein.

## Patentansprüche

1. Reaktor zum katalytischen Methanisieren eines Kohlendioxid und Wasserstoff enthaltenden Gasgemisches in einem Betriebszustand des Reaktors, mit
einem Reaktorbehälter (12),
einem darin in einem von einem Reaktoreingang (14) für das Gasgemisch zu einem Reaktorausgang (16) für das methanisierte Gasgemisches verlaufenden Hauptströmungsweg (18) angeordneten Katalysator (22),
wenigstens einem im Inneren des Reaktorbehälters abseits des Hauptströmungswegs (18) gelegenen, aber zum Hauptströmungsweg hin für das Gasgemisch an einer Anströmseite (42) offenen Raumbereich (30) und
einer Spülanordnung (10) zum Spülen des gesamten Reaktorbehälterinnenraums in einem außerhalb des Methanisierungsbetriebs eingenommenen Spülzustand mit einem das Gasgemisch verdrängenden Spülgas, **dadurch gekennzeichnet, dass**
die Spülanordnung (10) einen Zugang (50, 52, 56) zum Leiten des Spülgases in den abseits gelegenen Raumbereich (30, 32, 36) hinein oder aus dem abseits gelegenen Raumbereich (30, 32, 36) heraus an einer nicht mit der Anströmseite (40, 42, 46) zusammenfallenden Seite aufweist.

2. Reaktor nach Anspruch 1, **dadurch gekennzeichnet, dass** die Spülanordnung (10) einen Spülweg (60) mit einem ausgehend von dem Zugang (50) durch den abseits gelegenen Raumbereich (30) zu dem Hauptströmungsweg (18) verlaufenden Abschnitt (61) aufweist, entlang dem das Spülgas durch den Reaktorbehälter (12) leitbar ist.

3. Reaktor nach Anspruch 2, **dadurch gekennzeichnet, dass** der Spülweg (60) einen im Wesentlichen entlang des Hauptströmungswegs (18) verlaufenden Hauptspülast (62) und einen den Abschnitt (61) aufweisenden Nebenspülast (63) aufweist.

4. Reaktor Anspruch 3, **gekennzeichnet durch** wenigstens eine in das Reaktorinnere vorstehende Abtrennungswand (70) zur Leitung des durch den Zugang (50) strömenden Spülgases entlang des Nebenspülastes (63).

5. Reaktor nach einem der vorhergehenden Ansprüche, **dadurch gekennzeichnet, dass** das Spülgas über den Reaktoreingang (14) und über den Zugang (50) in den Reaktorbehälter (12) einleitbar und über den Reaktorausgang (16) aus dem Reaktorbehälter ausleitbar ist.

6. Reaktor nach einem der vorhergehenden Ansprüche, **dadurch gekennzeichnet, dass** die Spülanordnung eine Spülschleife (15) mit einem Abgang (17) zum Ableiten von Spülgas aus dem Hauptströmungsweg (18) aufweist, wobei das abgeleitete Spülgas über den Zugang (52) in den abseits gelegenen Raumbereich (32) einleitbar ist, und insbesondere durch den internen Druckunterschied im Reaktor, der durch einen internen Druckverlust verursacht wird, angetrieben wird.

7. Reaktor nach einem der vorhergehenden Ansprüche, **dadurch gekennzeichnet, dass** die Spülanordnung ein oder mehrere Ventile (20) zum Steuern einer über den Zugang (50, 52, 56), den Reaktoreingang (14) und/oder den Reaktorausgang (16) zu leitenden Spülgasmenge aufweist.

8. Reaktor nach einem der vorhergehenden Ansprüche, **dadurch gekennzeichnet, dass** der Zugang (50) in Form einer Öffnung in einer Außenwand des Reaktorbehälters (12) gebildet ist.

9. Reaktor nach einem der vorhergehenden Ansprüche, **dadurch gekennzeichnet, dass** das Spülgas ein Inertgas und/oder ein Bestandteil des Gasgemisches ist.

10. Reaktor nach einem der vorhergehenden Ansprüche, **dadurch gekennzeichnet, dass** in einer quer zu dem Hauptströmungsweg (18) verlaufenden Schnittebene die Form der äußeren Begrenzung eines in den Reaktorbehälter (12) eingebrachten Einsatzes, der den Hauptströmungsweg (18) aufweist, von der Form der inneren Begrenzung der Reaktorbehälterwand abweicht.

11. Reaktor nach einem der vorhergehenden Ansprüche, **dadurch gekennzeichnet, dass** der Reaktor ein Plattenreaktor ist.

12. Verfahren zum Betreiben eines Reaktors nach einem der Ansprüche 1 bis 11, bei dem der Reaktor von einem Betriebszustand, in dem ein Gasgemisch entlang eines Hauptströmungsweges (18) durch den Reaktor geleitet und dabei methanisiert wird, in einen Spülzustand außerhalb des Methanisierungsbetriebs gebracht wird, in dem ein das Gasgemisch aus dem Reaktor verdrängendes Spülgas durch den Reaktor geleitet wird, **dadurch gekennzeichnet, dass** das Spülgas entlang eines mit dem Hauptströmungsweg (18) nicht deckungsgleichen und durch einen abseits des Hauptströmungswegs (18) gelegenen Raumbereich (30) führenden Spülastes (63) geleitet wird.

13. Verfahren nach Anspruch 12, **dadurch gekennzeichnet, dass** das Spülgas zusätzlich entlang des Hauptströmungsweges (18) durch den Reaktor geleitet wird.

14. Verfahren nach Anspruch 12 oder 13, **dadurch gekennzeichnet, dass** entlang des Hauptströmungswegs (18) strömendes Spülgas aus dem Hauptströmungsweg (18) abgeführt, über eine Spülschleife (15) geführt und in den abseits gelegenen Raumbereich (32) eingeleitet wird.

15. Verfahren nach einem der Ansprüche 12 bis 14, **dadurch gekennzeichnet, dass** der Reaktor im Spülzustand auf etwa demselben Druck und/oder derselben Temperatur gehalten wird wie im Betriebszustand.

## Claims

1. A reactor for the catalytic methanation of a gas mixture comprising carbon dioxide and hydrogen in the operational state of the reactor, comprising:
a reactor vessel (12),
a catalyst (22) arranged therein, in a main flow path (18) extending from a reactor inlet (14) for the gas mixture to a reactor outlet (16) for the methanated gas mixture,
at least one spatial area (30) located within the reactor vessel, away from the main flow path (18) while being open to the main flow path for the gas mixture on an inflow side (42), and
a flushing arrangement (10) for flushing the whole interior of the reactor vessel in a flushing condition outside the methanation operation with a flushing gas to displace the gas mixture, **characterised in that**
the flushing arrangement (10) has an access (50, 52, 56), situated on a side not coinciding with the inflow side (40, 42, 46), for conducting the flushing gas into the remote spatial area (30, 32, 36) or from the remote spatial area (30, 32, 36).

2. The reactor according to claim 1, **characterised in that** the flushing arrangement (10) has a flushing path (60) with a section (61) extending from the access (50) through the remote spatial area (30) to the main flow path (18), along which section the flushing gas can be conducted through the reactor vessel (12).

3. The reactor according to claim 2, **characterised in that** the flushing path (60) has a main flushing branch (62) running substantially along the main flow path (18) and a secondary flushing branch (63) comprising the section (61).

4. The reactor according to claim 3, **characterised by** at least one separating wall (70) projecting into the interior of the reactor to guide the flushing gas flowing through the access (50) along the secondary flushing branch (63).

5. The reactor according to one of the preceding claims, **characterised in that** the flushing gas can be introduced via the reactor inlet (4) and via the access (50) into the reactor vessel (12) and discharged via the reactor outlet (16) from the reactor vessel.

6. The reactor according to one of the preceding claims, **characterised in that** the flushing arrangement comprises a flushing loop (15) having an outlet (17) for diverting flushing gas from the main flow path (18), wherein the diverted flushing gas can be introduced into the remote spatial area (32) via the access (52), and in particular is driven by the internal pressure difference in the reactor, which is caused by an internal pressure loss.

7. The reactor according to one of the preceding claims, **characterised in that** the flushing device comprises one or more valves (20) for controlling a flushing gas quantity to be conducted via the access (50, 52, 56), the reactor inlet (14) and/or the reactor outlet (16).

8. The reactor according to one of the preceding claims, **characterised in that** the access (50) is formed as an opening in an outer wall of the reactor vessel (12).

9. The reactor according to one of the preceding claims, **characterised in that** the flushing gas is an inert gas and/or a component of the gas mixture.

10. The reactor according to one of the preceding claims, **characterised in that**, in a sectional plane transversal to the main flow path (18), the shape of the outer perimeter of an insert which is introduced in the reactor vessel (12) and comprises the main flow path (18) differs from the shape of the inner perimeter of the reactor vessel wall.

11. The reactor according to one of the preceding claims, **characterised in that** the reactor is a plate reactor.

12. A method of operating a reactor according to any one of claims 1 to 11, wherein the reactor is brought from an operating state in which a gas mixture is conducted through the reactor along a main flow path (18) and thereby methanated to a flushing state outside the methanation operation in which a flushing gas displacing the gas mixture from the reactor is conducted through the reactor, **characterised in that** the flushing gas is conducted along a flushing branch (63) which is not congruent with the main flow path (18) and through a spatial area (30) situated remotely from the main flow path (18).

13. The method according to claim 12, **characterised in that** the flushing gas is additionally conducted through the reactor along the main flow path (18).

14. The method according to claim 12 or 13, **characterised in that** the flushing gas flowing along the main flow path (18) is discharged from the main flow path (18), guided through a flushing loop (15) and introduced into the remote spatial area (32).

15. The method according to one of claims 12 to 14, **characterised in that** the reactor is maintained at about the same pressure and/or the same temperature in the flushing state as in the operating state.

## Revendications

1. Réacteur pour la méthanation catalytique d'un mélange gazeux renfermant du dioxyde de carbone et de l'hydrogène, à l'état de fonctionnement du réacteur, comportant :
une cuve de réacteur (12),
un catalyseur (22) présent dans cette dernière, dans une voie d'écoulement principale (18) allant de l'entrée de réacteur (14) destinée au mélange gazeux jusqu'à une sortie de réacteur (16) destinée au mélange gazeux méthané,
au moins un volume (30) situé à l'intérieur de la cuve de réacteur à l'écart de la voie d'écoulement principale (18) en étant toutefois ouvert sur la voie d'écoulement principale pour le mélange gazeux au niveau d'un côté d'écoulement (42), et
un dispositif de purge (10) destiné à purger la totalité de l'intérieur de la cuve de réacteur dans un état de purge adopté hors du fonctionnement de méthanation, au moyen d'un gaz de purge visant à chasser le mélange gazeux, **caractérisé en ce que**
le dispositif de purge (10) présente, sur un côté différent du côté d'écoulement (40, 42, 46), un accès (50, 52, 56) permettant d'apporter le gaz de purge dans le volume (30, 32, 36) situé à l'écart ou de le faire sortir dudit volume (30, 32, 36) situé à l'écart.

2. Réacteur selon la revendication 1, **caractérisé en ce que** le dispositif de purge (10) présente une voie de purge (60) comportant une section (61) parcourant le volume (30) situé à l'écart en partant de l'accès (50) jusqu'à la voie d'écoulement principale (18), le gaz de purge pouvant traverser la cuve de réacteur (12) le long de ladite section.

3. Réacteur selon la revendication 2, **caractérisé en ce que** la voie de purge (60) présente une branche de purge principale (62) située essentiellement le long de la voie d'écoulement principale (18) et une branche de purge secondaire (63) présentant la section (61).

4. Réacteur selon la revendication 3, **caractérisé par** au moins une paroi de séparation (70) faisant saillie dans l'intérieur du réacteur et destinée à guider le long de la branche de purge secondaire (63) le gaz de purge s'écoulant par l'accès (50).

5. Réacteur selon l'une quelconque des revendications précédentes, **caractérisé en ce que** le gaz de purge peut être introduit par l'entrée de réacteur (14) et par l'accès (50) dans la cuve de réacteur (12) et peut être évacué de la cuve de réacteur par la sortie de réacteur (16).

6. Réacteur selon l'une quelconque des revendications précédentes, **caractérisé en ce que** le dispositif de purge présente une boucle de purge (15) qui comporte une sortie (17) permettant de détourner le gaz de purge hors de la voie d'écoulement principale (18), le gaz de purge détourné pouvant être introduit, par l'accès (52), dans le volume (32) situé à l'écart, en étant notamment entraîné par le différentiel de pression interne présent dans le réacteur du fait d'une perte de pression interne.

7. Réacteur selon l'une quelconque des revendications précédentes, **caractérisé en ce que** le dispositif de purge présente un ou plusieurs robinets (20) permettant de réguler la quantité de gaz de purge destinée à être conduite par l'accès (50, 52, 56), l'entrée de réacteur (14) et/ou la sortie de réacteur (16).

8. Réacteur selon l'une quelconque des revendications précédentes, **caractérisé en ce que** l'accès (50) est conçu sous la forme d'une ouverture dans une paroi extérieure de la cuve de réacteur (12).

9. Réacteur selon l'une quelconque des revendications précédentes, **caractérisé en ce que** le gaz de purge est un gaz inerte et/ou un constituant du mélange gazeux.

10. Réacteur selon l'une quelconque des revendications précédentes, **caractérisé en ce que**, dans un plan en coupe transversal à la voie d'écoulement principale (18), la forme de la délimitation extérieure d'un élément rapporté introduit dans la cuve de réacteur (12) et présentant la voie d'écoulement principale (18) diffère de la forme de la délimitation intérieure de la paroi de la cuve de réacteur.

11. Réacteur selon l'une quelconque des revendications précédentes, **caractérisé en ce que** le réacteur est un réacteur à plaques.

12. Procédé d'exploitation d'un réacteur selon l'une des revendications 1 à 11, dans lequel le réacteur passe d'un état de fonctionnement, dans lequel un mélange gazeux est amené à traverser le réacteur le long d'une voie d'écoulement principale (18) et est ainsi méthané, à un état de purge hors du fonctionnement de méthanation, dans lequel un gaz de purge visant à chasser le mélange gazeux hors du réacteur est amené à traverser le réacteur, **caractérisé en ce que** le gaz de purge est conduit le long d'une branche de purge (63) ne coïncidant pas avec la voie d'écoulement principale (18) et est amené à traverser un volume (30) situé à l'écart de la voie d'écoulement principale (18).

13. Procédé selon la revendication 12, **caractérisé en ce que** le gaz de purge est amené à traverser le réacteur le long de la voie d'écoulement principale (18).

14. Procédé selon la revendication 12 ou 13, **caractérisé en ce que** le gaz de purge s'écoulant le long de la voie d'écoulement principale (18) est amené à sortir de la voie d'écoulement principale (18), est guidé dans une boucle de purge (15) et est introduit dans le volume (32) situé à l'écart.

15. Procédé selon l'une des revendications 12 à 14, **caractérisé en ce que** le réacteur est maintenu à une pression et/ou une température sensiblement identiques à l'état de rinçage et à l'état de fonctionnement.
